# EUROPEAN PATENT APPLICATION

(11) **EP 1 797 800 A2**
(43) Date of publication of application: **20.06.2007**
(21) Application number: 06125414.0
(22) Date of filing: 05.12.2006
(51) Int. Cl.: A47J 31/40

(54) **Capsule dispensing apparatus for vending machines, in particular beverage vending machines**

(30) Priority: 13.12.2005 IT PN20050091
(71) Applicant: N&W Global Vending S.p.A., 24030 Valbrembo (Bergamo) (IT)
(72) Inventor: Mosconi, Claudio, 24100, Bergamo (IT)
(74) Representative: Gonella, Mario

(57) **Abstract**

The present invention refers to an apparatus for dispensing capsules, intended for use in connection with automatic vending equipment, in particular beverage vending machines.

The inventive capsule dispensing apparatus comprises a storage chamber (1) adapted to accommodate a plurality of capsules (4) in a random arrangement, an orientating device (3) adapted to dispose said capsules (4) in at least a position having a substantially horizontal axis. The inventive capsule dispensing apparatus is characterized in that said orientating device (3) thereof comprises at least a wall (5) that is displaceable in a substantially vertical direction according to a reciprocating motion pattern and comprises one or more guide partitions or baffles (10) adapted to only receive capsules (4) that are disposed according to said position having a substantially horizontal axis.

Claimed within the scope of the present invention is also a vending machine that comprises a capsule dispensing apparatus as described above.

## Description

The present invention refers to an apparatus for dispensing capsules, intended for use in connection with automatic vending equipment, such as in particular beverage vending machines.

As used in this specification, the term "capsules" shall be understood as referring to and defining cylindrically or substantially frusto-conically shaped envelopes provided with an annular rim.

Nowadays, automatic beverage vending machines are increasingly to be found, in which use is made of food substances intended for brewing that are pre-packaged in single-use envelopes, generally referred to as "capsules" in the art, in view of more effectively preserve the aroma and the genuineness of the product, while at the same time ensuring a high level of hygiene standards. In general, such capsules consist of containers having a cylindrical or substantially frusto-conical shape and provided with an annular rim; largely used are however also capsules having different shapes, such as for instance bar-shaped capsules, spheroidal capsules, and the like. In all cases, these capsules are usually filled with a liquid or solid mixture for the preparation of hot and/or cold beverages, such as coffee, tea, infusions, tisanes, and the like.

In vending machines that make use of these single-use capsules, the same capsules are each time withdrawn from a storage compartment and conveyed into a brewing unit that prepares the requested beverage by gaining access to the substance contained in the capsule, generally through proper perforation of the same capsule.

Owing to the brewing unit of these machines being set and adapted to receive the individual capsules in a given, pre-determined orientation thereof, which may for instance depend on the particular disposition of the surfaces due to be perforated, in prior-art vending machines of this kind the capsules are stored in an arrangement, in which they are stacked upon each other according to a preferential orientation so as to form stacks stored in one or more compartments. It can be most readily appreciated that replenishment operations to make up for sold-out products must be performed by taking into due account the actual size of the storage compartments available in the particular vending machine model involved, as well as setting up pre-arranged stacks of capsules disposed so as to feature the preferential orientation accepted by the brewing unit. Another way in which product replenishment may be done is by having the capsules stacked manually in the related storage compartments. This however implies the operator having to spend considerably longer servicing times around the vending machine, while running a real risk of making errors in the positioning of the capsules, which may jeopardize the correct operation of the machine and cause the owner of the vending business to suffer economic losses.

In an effort to at least partially solve the above-noted problems, vending machines have been proposed that do not require the capsules to be stored in any pre-arranged order. An example of vending machines of such kind is described in the International Patent Application nr. WO2004/045350, in which a device is disclosed that is effective in imparting a preferential orientation to a number of capsules that are stored in bulk, i.e. haphazardly, within a containing compartment. According to this solution, near the bottom portion of a storage chamber there is provided a hopper, at the bottom of which there are located rotary handling means along with a first orientating device that enables the capsules to be disposed in such position as to cause the longitudinal axis thereof to lie substantially horizontal. This first device is comprised of a sorting partition that defines a plurality of cavities adapted to only accommodate capsules disposed with their own axis oriented according to a horizontal direction. A disc provided with apertures in the shape of the longitudinal section of the capsules is driven to rotate under such partition and organizes the spatial disposition of the capsules. A second orientating device operates to then dispose the capsules according to a same vertical-axis position.

The solution proposed in WO2004/045350 has the disadvantage of being very complex in its construction, since it requires a considerable number of individual parts to be assembled together. In addition, the space requirements of such capsule orientating arrangement in the vertical direction are quite significant, so that - within a vending machine - the need most disadvantageously arises for the volume of the actual capsule storage container to be correspondingly reduced.

A further drawback of the arrangement disclosed in WO2004/045350 lies in the jamming situations that may quite likely occur in the first orientating device owing to the fact that the handling means - consisting of a conically shaped stirrer - exert just a limited mechanical action on the capsules inside the capsule storage container. The weight of the capsules lying upon the ones that are in direct contact with the stirrer restricts the movement of the capsules underneath, so that some of them may become disposed in a manner such as to obstruct the access into the cavities formed by the sorting partition. This circumstance would of course affect and limit the overall reliability of the whole arrangement, since the stirrer might well be required to complete many revolutions in order to cause all cavities of the sorting partition to be duly occupied by the capsules.

It therefore is the object of the present invention to provide a capsule dispensing apparatus for vending machines, in particular beverage vending machines, which is effective in doing away with the drawbacks and disadvantages of prior-art capsule dispensing devices.

Within this object, it is a purpose of the present invention to provide a capsule dispensing apparatus of the above-noted kind, which is improved in its reliability and simple to construct and assembly.

It is a further purpose of the present invention to provide a capsule dispensing apparatus of the above-noted kind, which is more compact and has less space requirements than prior-art capsule dispensing devices, wherein the inventive apparatus maintains the advantage of not requiring any particular capsule pre-orientation operation when replenishing product stocks in the machine, such capsules being in fact able to be stored haphazardly, i.e. not in an orderly manner, in the related storage container.

Still another purpose of the present invention is to provide a capsule dispensing apparatus of the above-noted kind, which is able to dispense the capsules in such a manner as to favour the use of the capsules that have been dwelling for a longer time in the apparatus.

A further purpose of the present invention is to provide a capsule dispensing apparatus of the above-noted kind, which can be used with capsules of any shape whatsoever.

Yet another purpose of the present invention is to provide a capsule dispensing apparatus of the above-noted kind, which is effective in preventing capsules to run into jammed conditions as they are being oriented and conveyed towards a brewing or similar unit for them to be used.

An equally important purpose of the present invention is finally to provide a capsule dispensing apparatus of the above-noted kind, which is able to perform the required capsule orientating operations in a more effective manner than prior-art capsule orientating devices in general.

According to the present invention, these aims as set forth above are reached in a capsule dispensing apparatus for automatic vending machines, in particular beverage vending machines, which incorporates the features and characteristics as recited in the appended claim 1. Features and advantages of the present invention will anyway be more readily understood from the description that is given below by way of nonlimiting example with reference to the accompanying drawings, in which:
- Figure 1 is a perspective view of a capsule dispensing apparatus according to the present invention;
- Figure 2 is a schematical side view of a capsule orientating device in a first operating position thereof;
- Figure 3 is a schematical side view of the capsule orientating device shown in Figure 2, as viewed in a second operating position thereof;
- Figure 4 is a schematical view of a release device;
- Figures 5 to 7 are views of conveyors in three different embodiments thereof.

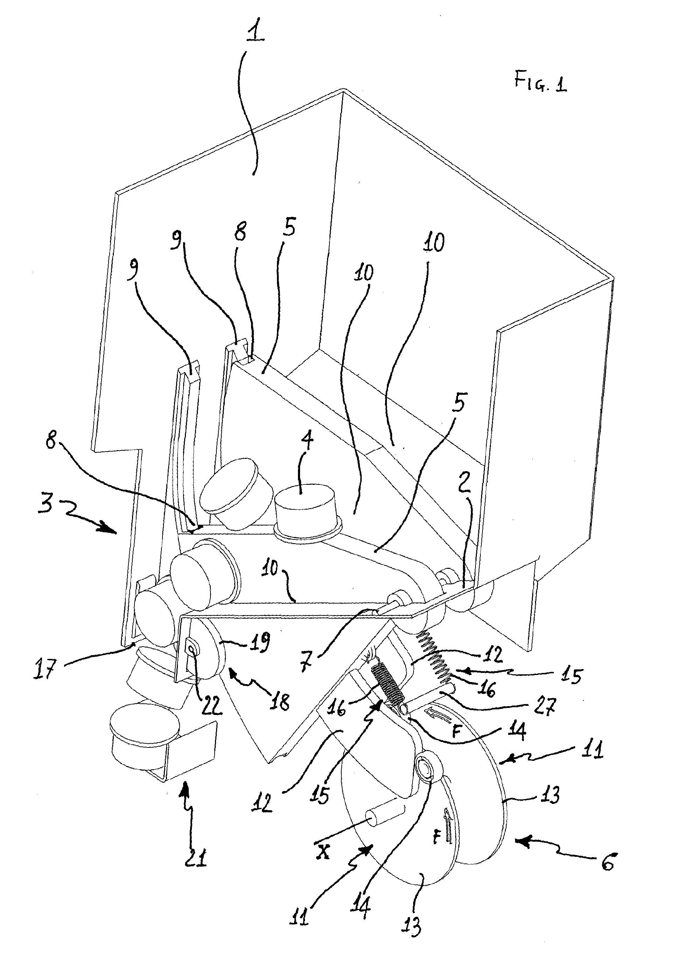

With reference to Figure 1, the inventive capsule dispensing apparatus for automatic vending machines, such as in particular beverage vending machines, comprises a storage chamber 1, in which there are accommodated a plurality of capsules in a random arrangement. The bottom of the chamber 1 is provided with an inclined surface 2 so as to form a hopper aimed at performing as a chute to assist the capsules 4 in smoothly exiting the chamber 1. An orientating device 3 is provided to cause the capsules 4 to dispose themselves so that the longitudinal axis thereof extends horizontally.

The orientating device 3 comprises one or more walls 5 that are displaced by actuator means 6. Such displacement is of a reciprocating kind and takes place in a substantially vertical direction. In other words, each wall 5 is displaced cyclically upwards and downwards along a vertical plane. In Figure 1, the displacement of the walls 5 is brought about by rotating said walls in the clockwise and anticlockwise direction in a reciprocating manner, wherein it will be appreciated that, instead of actuating the walls 5 in order to have them performing reciprocating rotary motions, the same walls 5 can be actuated so as to perform a reciprocating rectilinear motion.

The walls 5 are arranged so as to extend along a vertical plane, so that, owing to the motion imparted by the actuator means 6, their thickness will cause the bulk of capsules 4 in the storage chamber to undergo a mixing action that is effective in causing the same capsules to tip over and the longitudinal axis thereof to progressively orientate into a horizontal direction. In view of enhancing the effectiveness of the mixing action, the walls 5 are at least partially provided within the storage chamber 1.

In order to avoid that, during the displacement thereof, the walls 5 may subside or sag under the weight of the bulk of capsules 4 stored in the chamber 1, or that they may displace according to a different trajectory than the one imparted by the actuator means 6, the walls 5 are provided with a fluted profile 8 engaging guide means 9 attached to the body of the storage chamber 1.

The walls 5 are arranged parallel to each other and are spaced from each other so as to form one or more guide partitions or baffles 10 adapted to receive the capsules 4 that are disposed with their longitudinal axis orientated in a horizontal direction by the action of said walls 5. The width of said guide partitions 10 is such so that only the capsules 4 that are disposed with their longitudinal axis orientated in a horizontal direction can be accommodated there.

The above-cited partitions 10 are defined by the inclined surface 2, which at the same time forms the bottom surface thereof, and a pair of side surfaces or flanks, wherein at least one of these flanks is composed of one of said walls 5, while the other one may be constituted by either a second wall 5 or one of the walls defining the body of the storage chamber 1, the latter being a condition that is true for the guide partitions 10 that are located adjacent to the walls of the chamber 1 or in the case in which the orientating device 3 id provided with a single wall 5.

The actuator means 6 that urge the walls 5 into displacing are driven by motor means (not shown in the Figures) of a kind largely known as such in the art, and comprise cam means 11 adapted to slide on flat-bar means 12 associated to each wall 5. Each wall 5 is provided with a dedicated cam means 11 of its own. These cam means 11 comprise a disk 13 that is driven by the motor means to rotate about its own longitudinal axis X in the direction indicated by the arrows F shown in Figure 1, and comprise a roller 14 that is rotatably mounted in a peripheral region of said disk 13. Contrast means 15 are provided to oppose the displacing movement imparted by the actuator means 6 to each wall 5. Preferably, these contrast means 15 comprise a spiral spring 16 having a first end thereof secured to a portion 27of support structure of the capsule dispensing apparatus, and a second end thereof associated to the wall 5, wherein it can be most readily appreciated that other kinds of contrast means 15 may of course be used in an equally effective manner within the scope of the present invention. For example, use may be made of cams having an appropriately shaped contour so as to move the walls 5 in a direction opposite to the one characterizing the motion imparted by the actuator means 6.

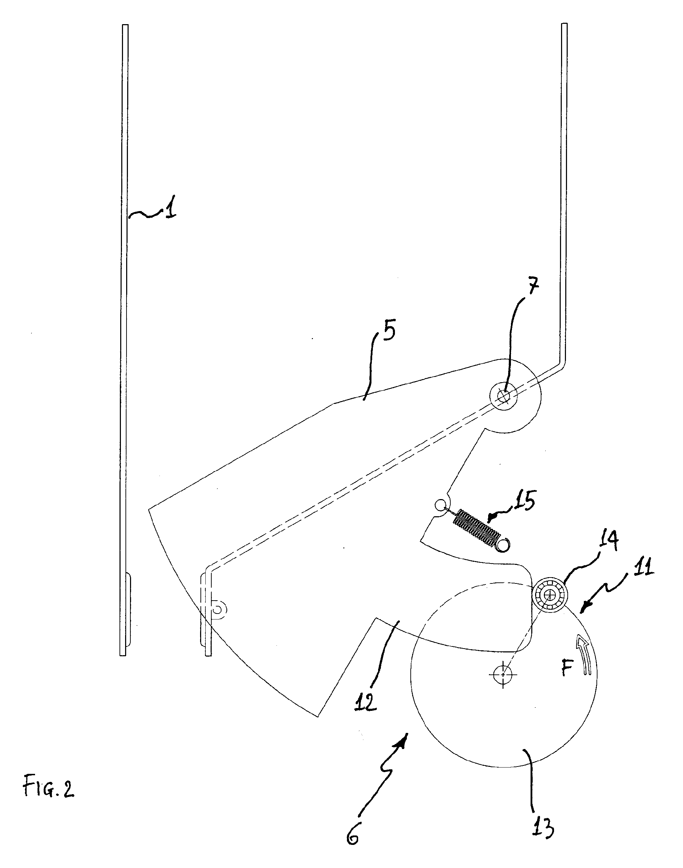

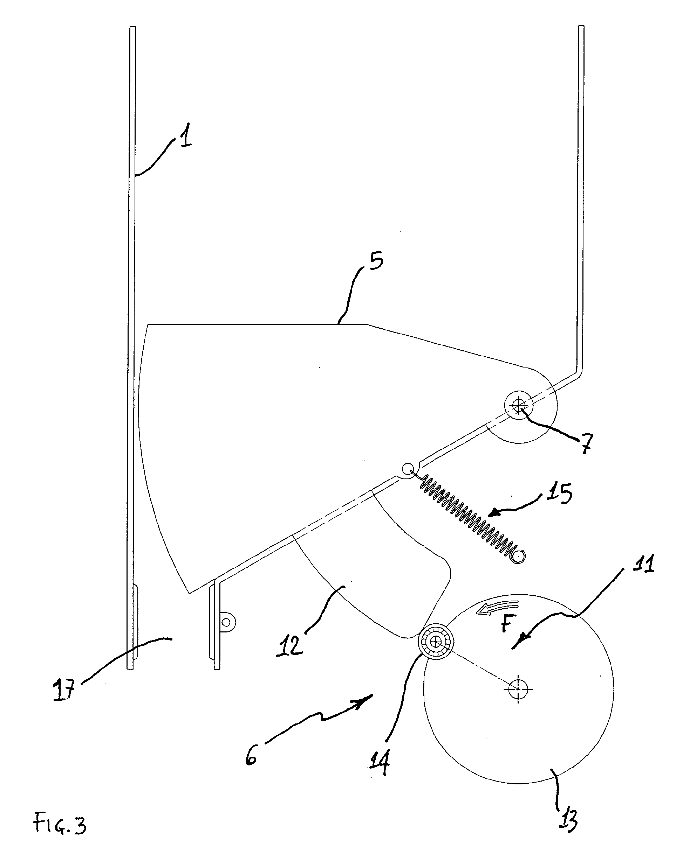

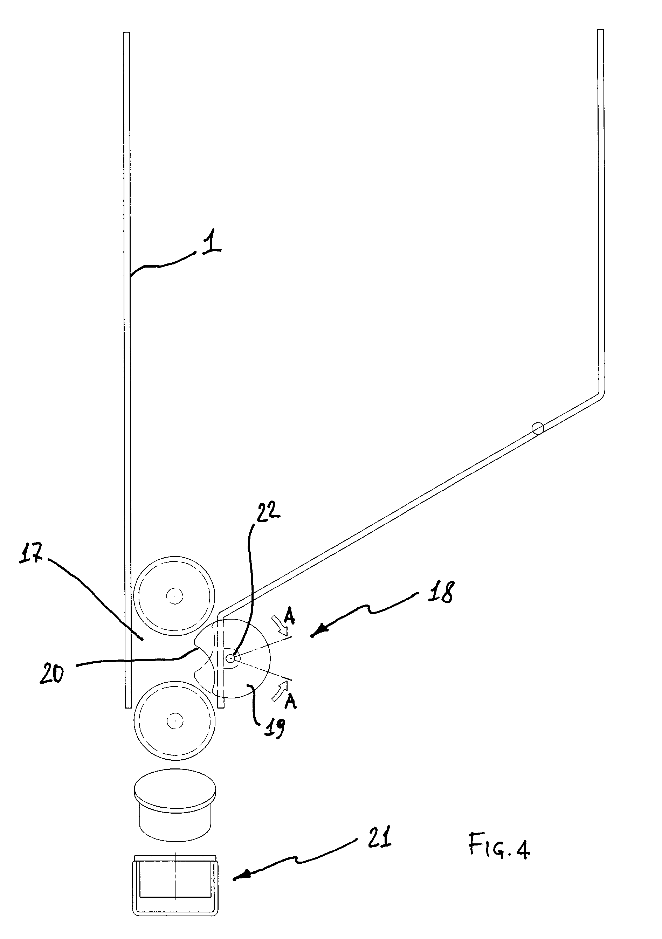

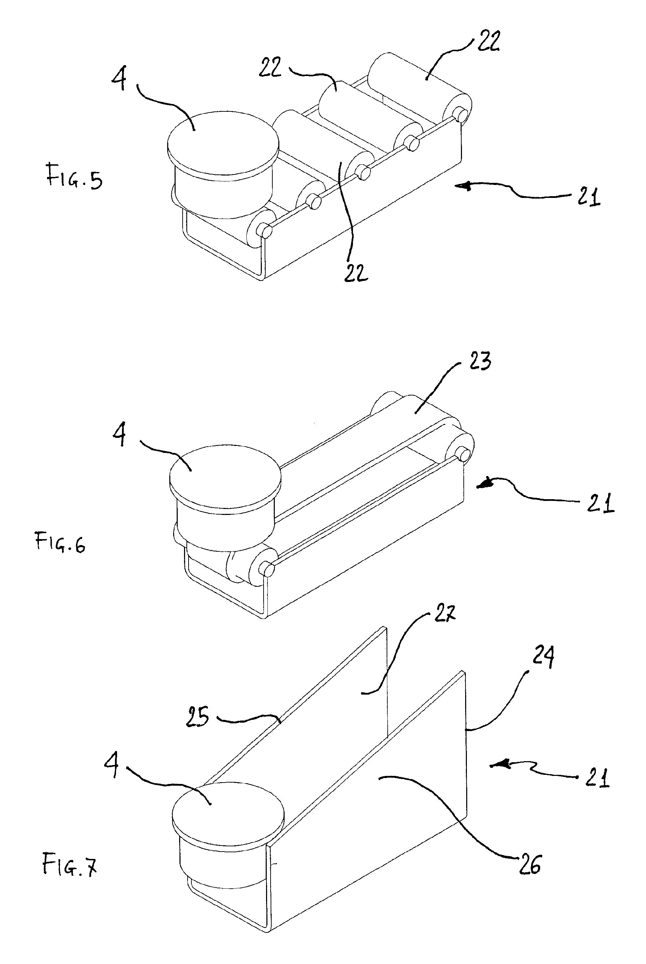

Represented in Figures 2 and 3 is a wall 5, as viewed in two distinct operating positions into which the same wall is displaced owing to the movement imparted by the above-cited actuator means 6. In Figure 2, the wall 5 is in a resting position thereof and the actuator means 6 are in a position, in which they just start driving the wall 5 into movement. The related motor means (not shown in the Figure) drive the cam means 11 into moving, i.e. cause the disk 13 to rotate in the direction indicated by the arrow F. When the roller 14 enters into contact with the flat-bar means 12, these are pushed, thereby causing the wall 5 to rotate about the fulcrum pin 7. As the disk 13 keeps rotating, the roller 14 slides along the flat-bar means 12 until it reaches the position illustrated in Figure 3, which corresponds to the maximum extent of rotation of the wall 5 in the vertical direction. During this rotation of the wall 5, the contrast means 15 oppose such movement, thereby increasing the potential energy thereof. When the roller 14 eventually leaves the flat-bar means 12, i.e. moves beyond the position shown in Figure 3, the contrast means 15 release the hitherto accumulated potential energy, thereby causing the wall 5 to move back from the position of maximum rotation extent in the vertical direction (Figure 3) to the resting position thereof (Figure 3). In other words, the contrast means 15 act to urge the wall 5 into rotating in a direction opposite to the one imparted by the cam means 11.

When the orientating device 3 comprises a plurality of walls 5, the cam means 11 may be arranged so as to be adapted to drive said walls in a manner that these are able to move into mutually offset positions. This is achieved by distributing the rollers 14 on the periphery of the related disks 13 in different angular positions relative to a common datum or reference, so that they will not be aligned with each other. In this way, when a first roller 14 enters into contact with the related flat-bar means 12 and starts moving a first wall 5, a second roller 14 will not have intercepted the related flat-bar means 12 yet, thereby leaving the position of a second wall 5 unaltered. This practically ensures that the mixing action of the capsules 4 within the storage chamber 1 turns out to be particularly effective in causing the same capsules 4 to dispose themselves with their own longitudinal axis oriented in the horizontal direction, so as to be able to be received into the guide partitions 10.

If the walls 5 are desirably to be imparted particular motion modes, such as for instance displacements alternating with rests in a direction, or if the movements of two or more walls are to be desirably synchronized, the actuator means 6 may be provided in a any suitable manner differing from the one illustrated in the Figures. In particular, the cam means 11 may comprise disks 13 provided with a properly contoured periphery interacting with the flat-bar means 12 associated to each wall 5, and possibly provided with a roller 14 each. Thanks to the particular contour of the periphery of the disks 13, the rotation of such disks will cause the related flat-bar means 12 and, as a result, the walls 5 to displace according to different rising laws or modes. If desired, use can be made of similarly contoured disks 13 to move two or more of said walls 5 concurrently and in the same manner.

Each one of the partitions 10 is provided with an aperture 17, from which the capsules 4, duly oriented by the orientating device 3, are able to escape. Downstream from such orientating device (Figure 4) there are arranged one or more release devices 18, which are adapted to intercept the capsules 4 contained in the guide partitions 10 and release them one at a time, so that they are dispensed according to a cadenced, measured delivery pattern. The number of the release devices 18 will correspond to the number of apertures 17 provided. According to a preferred embodiment, the release device 18 comprises a pan 19 provided with a indentation, i.e. recessed portion 20. The pan 19 is rotatably associated to the storage chamber 1 and is driven to alternately rotate by an appropriate angle about the pin 22 in the two directions of rotation indicated by the arrows A in Figure 4, so as to release a single capsule at a time, while keeping the capsules 4 positioned upstream to the one being released in a stable condition. The motor means used to drive the release devices 18 can be dedicated ones, i.e. motor means intended to just perform such particular duty, or - if desired - they may be the same motor means that are used to drive the actuator means 6.

The capsules 4 being released by the release devices 18 undergo a spontaneous rotation that is effective to practically dispose them with their own longitudinal axis oriented in a vertical direction. Such rotation is induced by the force of gravity and the disposition of the centre of gravity of the same capsules. After being so released, the capsules 4 are received onto a conveyor 21 that conveys them towards a utilization unit (not shown in the Figures), as may for instance be a brewing unit.

Figures 5 to 7 illustrate three possible variations in the embodiment of such conveyor 21. Accordingly, such conveyor 21 may consist of a surface comprised of possibly motor-driven conveyance rollers 22 (Figure 5) or it may be embodied in the form of a conveyor belt 23 (Figure 6). According to a third different embodiment thereof, the conveyor 21 is comprised of a U-shaped profile section 24 defining an inclined plane 25, which is adapted to receive and accommodate each capsule 4 between the parallel surfaces 26, 27 of the profile section 24, and to convey it towards a utilization unit (not shown), e.g. a brewing unit, owing to the force of gravity.

Fully apparent from the above description is therefore the ability of the present invention to effectively reach the aims and advantages cited afore, by providing a capsule dispensing apparatus for use in connection with automatic vending equipment, in particular beverage vending machines, in which capsules that are stored haphazardly, i.e. in no pre-established order, within a storage compartment, are orientated and conveyed towards a utilization unit, such as for instance a brewing unit, in a more effective manner as compared with prior-art capsule dispensing equipment of the same kind. Moreover, a capsule dispensing apparatus according to the present invention is advantageously compact, i.e. has low space requirements, and reliable in operation thanks the marked ability thereof to avoid capsule jamming conditions and undesired machine downtimes.

It should be noticed that the materials used, as well as the shapes and the sizing of the individual items of the apparatus of the invention, may each time be selected so as to more appropriately meet the particular requirements or suit the particular application.

The various items and parts entering the construction of the apparatus of the present invention shall of course not be embodied strictly and solely in the manner that has been described and illustrated above, but can rather be implemented in a number of different embodiments, all of which falling within the scope of the present invention.

## Claims

1. Apparatus for dispensing capsules intended for use in connection with automatic vending equipment, in particular beverage vending machines, comprising:
- a storage chamber (1) adapted to accommodate a plurality of capsules (4) in a random arrangement,
- an orientating device (3) adapted to dispose said capsules (4) in at least a position having a substantially horizontal axis,
**characterized in that** said orientating device (3) thereof comprises at least a wall (5) that is displaceable in a substantially vertical direction according to a reciprocating motion pattern and comprises one or more guide partitions or baffles (10) adapted to receive only capsules (4) that are disposed according to said position having a substantially horizontal axis.

2. Capsule dispensing apparatus according to claim 1, wherein said at least a wall (5) is at least partially arranged inside said storage chamber (1) and is rotatably movable relative thereto.

3. Capsule dispensing apparatus according to any of the preceding claims, wherein said at least a wall (5) extends in a substantially vertical plane and comprises a fluted profile (8) engaging fixed guide means (9).

4. Capsule dispensing apparatus according to any of the preceding claims, wherein said at least a wall (5) is moved by actuator means (6) comprising cam means (11) sliding on flat-bar means (12) associated to said one or more walls (5).

5. Capsule dispensing apparatus according to claim 4, wherein said cam means (11) comprise a disk (13) and a roller (14) that is rotatably mounted in a peripheral region of said disk (13).

6. Capsule dispensing apparatus according to claim 5, wherein the rollers 14 of said cam means (11) are each distributed along the related disk (13) at different angular positions relative to a common datum.

7. Capsule dispensing apparatus according to claim 4, wherein said cam means (11) comprise a disk (13) provided with a contoured peripheral edge that interacts with said flat-bar means (12).

8. Capsule dispensing apparatus according to claim 7, wherein said flat-bar means (12) comprise a roller (14).

9. Capsule dispensing apparatus according to any of the claims 6 to 8, comprising contrast means (15) adapted to oppose the movement imparted by said actuator means (6) to said one or more walls (5).

10. Capsule dispensing apparatus according to claim 9, wherein said contrast means (15) comprise a spiral spring (16) having a first end thereof secured to a portion (27) of support structure of said capsule dispensing apparatus, and a second end thereof associated to said wall (5).

11. Capsule dispensing apparatus according to any of the preceding claims, wherein guide partitions or baffles (10) are defined by an inclined bottom surface (2) and a pair of side surfaces or flanks that are substantially parallel to and spaced from each other, in which at least one of them is composed of said at least a movable wall (5).

12. Capsule dispensing apparatus according to claim 11, wherein at least one of said side surfaces is composed of a wall of said storage chamber (1).

13. Capsule dispensing apparatus according to any of the preceding claims, comprising one or more release devices (18) arranged downstream from said orientating device (3) and adapted to intercept and release said capsules (4) one at a time.

14. Capsule dispensing apparatus according to claim 13, wherein said one or more release devices (18) comprise a pan (19) provided with a indentation or recessed portion (20), said pan being rotatably mounted on said storage chamber (1).

15. Capsule dispensing apparatus according to any of the preceding claims 13 and 14, further comprising a conveyor (21) for the conveyance of the capsules (4) being released by said one or more release devices (18).

16. Capsule dispensing apparatus according to claim 15, wherein said conveyor (21) consists of a surface comprising conveyance rollers (22).

17. Capsule dispensing apparatus according to claim 15, wherein said conveyor (21) consists of a conveyor belt (23).

18. Capsule dispensing apparatus according to claim 15, wherein said conveyor (21) is comprised of a U-shaped profile section (24) defining an inclined plane (25).

19. Automatic food-product vending machine, particularly a beverage vending machine, comprising a capsule dispensing apparatus according to any of the preceding claims 1 to 18.
